Europäisches Patentamt

European Patent Office

Office européen des brevets

(19)

(11) Veröffentlichungsnummer: **0 239 898 B1**

# EUROPÄISCHE PATENTSCHRIFT

(45) Veröffentlichungstag der Patentschrift: 03.04.91

(51) Int. Cl.⁵: **F02B 29/00**

(21) Anmeldenummer: 87104225.5

(22) Anmeldetag: 23.03.87

(54) **Verbrennungsmotor mit einem mechanisch verbundenen Verdichter für die Verbrennungsluft.**

(30) Priorität: 04.04.86 DE 3611238

(43) Veröffentlichungstag der Anmeldung:
07.10.87 Patentblatt 87/41

(45) Bekanntmachung des Hinweises auf die
Patenterteilung:
03.04.91 Patentblatt 91/14

(84) Benannte Vertragsstaaten:
**CH DE ES FR GB IT LI SE**

(56) Entgegenhaltungen:
**DE-A- 2 825 945**
**DE-C- 3 313 679**
**GB-A- 2 154 280**

**MOTORTECHNISCHE ZEITSCHRIFT MTZ,
Band 16, Nr. 9, September 1955, Seiten
256-264; P. GROTE.: "Drehkolben-Gebläse
und Drehkolben-Verdichter für die Aufladung von Verbrennungsmotoren"**

(73) Patentinhaber: **Siemens Aktiengesellschaft
Wittelsbacherplatz 2
W-8000 München 2(DE)**

(72) Erfinder: **Schabert, Hans-Peter, Dipl.-Ing.
Friedrich-Bauer-Strasse 28
W-8520 Erlangen(DE)**
Erfinder: **Zach, Klaus, Dipl.-Ing.
Schwedler Strasse 29
W-8520 Erlangen(DE)**
Erfinder: **Heller, Max, Dipl.-Ing.
Dresdner Strasse 18
W-8525 Uttenreuth(DE)**

## Beschreibung

Verbrennungsmotor mit einem mechanisch verbundenen Verdichter für die Verbrennungsluft

Die Erfindung betrifft einen Verbrennungsmotor mit einem Kühlwasserkreis mit Antriebsglied und einem mechanisch verbundenen Verdichter für die Verbrennungsluft, dessen Gehäuse mit einer Kühleinrichtung versehen ist, welche ein steuerbares Glied zur Steuerung der Kühlleistung hat.

Aus der DE-OS- 28 25 945 ist ein derartiger Verbrennungsmotor mit einem Kühlwasserkreis bekannt. Über Ansaugrohre ist dem Verbrennungsmotor ein Schraubenverdichter zum Verdichten der Verbrennungsluft vorgeschaltet. Der Schraubenverdichter weist ein kühlbares Gehäuse auf, das mit dem Kühlwasserkreis des Verbrennungsmotors verbunden ist. Der Kühlwasserkreis umfaßt einen Kühler mit Lüfterrad, eine Umwälzpumpe und einen Ladekühler auf, welcher sekundärseitig zur Kühlung der Verbrennungsluft zwischen dem Schraubenverdichter und dem Verbrennungsmotor geschaltet ist. Das Kühlwasser wird stetig umgewälzt. Mit dem Lüfterrad und dem Luftkühler ist eine permanente Kühlung des Kühlwassers vorgesehen. Dieses Kühlsystem ist nur für die Kühlung der Verbrennungsluft einsetzbar. Ungüstige Betriebsbedingungen, z. B. winterliche Kälte und/oder ein Motorteillastbetrieb, bei dem der Verdichter als Gasmotor betrieben wird und dabei der Verbrennungsluft Wärme entzieht, sind nicht berücksichtigt.

Aus der deutschen Patentschrift 33 13 679 ist ein Verbrennungsmotor bekannt, bei dem eine Vorwärmung der Verbrennungluft vorgesehen ist. Dies geschieht dadurch, daß die Luft, die von dem als Gasmotor bezeichneten Verdichter dem Verbrennungmotor zugeführt wird, damit sie durch die Abgaswärme erwärmt wird. Durch die Mischung mit anderer Luft, die vom Luftfilter kommt und ungewärmt ist, wird die gewünschte Motor-Ansaugtemperatur mit Hilfe einer Stellklappe eingeregelt. Die Ausbildung des Verdichters ist dabei ebenso offengelassen wie Möglichkeiten zur Beeinflussung der Temperatur des Verdichters oder des Verbrennungsmotors.

Die Erfindung geht demgegenüber von der Aufgabe aus, bei einem Verbrennungsmotor der eingangs genannten Art eine in Bezug auf unterschiedliche Temperaturen besonders günstige Ausbildung des Verdichters zu schaffen, damit der Verbrennungsmotor bei allen Außentemperaturen ökonomisch betrieben werden kann. Die MotorAnsaugtemperatur soll im Bereich von etwa 10 °C bis 30 °C bleiben.

Die Lösung besteht bei einem Verbrennungsmotor der eingangs genannten Art erfindungsgemäß darin, daß er gemäß Anspruch 1 ausgebildet ist.

Aus der Zeitschrift MTZ, Jahrgang 16, Heft 9 vom September 1955, insbesondere Seite 262, ist zwar bereits ein Verdichter für einen Verbrennungsmotor bekannt, dessen Gehäuse Kühlrippen, also eine Kühleinrichtung, aufweist. Die Wirkung dieser Kühlrippen ist jedoch nicht steuerbar. Außerdem gibt es bei dem bekannten Verdichter keine Vorwärmung der Verbrennungsluft.

Die Erfindung nutzt dagegen die Tatsache, daß ein Rollkolbenverdichter seiner Bauart nach einen besonders guten Wärmeübergang zwischen der geförderten Luft und seinem Gehäuse hat, so daß in der Regel ein nachgeschalteter Ladeluftkühler entfallen kann. Die gewünschte Motor-Ansaugtemperatur wird durch Beeinflussung der Temperatur des Verdichtergehäuses erreicht. Dabei wird Rücksicht genommen auf die im Verdichter selbst erzeugte Erwärmung der Verbrennungsluft oder auf ihre Abkühlung beim Betrieb als Gasmotor.

Da die Abkühlung beim Rollkclbenverdichter mit seiner hohen inneren Dichtheit hohe Werte von z.B. 50 °C annehmen kann, wenn er von Atmosphärendruck aus infolge einer auf Schwachlast eingestellten Füllmengenregelung oder infolge Verringerung seiner Antriebsdrehzahl relativ zum Verbrennungsmotor auf einen Absolutdruck von z.B. 0,4 bar im Motor-Saugkanal entspannt, ist das Gehäuse des Rollkolbenverdichters vorteilhaft mit einer Einrichtung zur Übertragung von Wärme des Verbrennungsmotors versehen. Vorzugsweise ist diese mit der Kühleinrichtung in der Weise kombiniert, daß das Gehäuse an einen Kühlwasserkreis des Verbrennungsmotors über ein Dreiwegeventil angeschlossen ist, dessen anderer Zweig mit einem separaten Kühler verbunden ist. Zur Kühlmittelumwälzung wird vorteilhaft eine von der Kühlwasserpumpe des Motors unabhängige Pumpe eingesetzt, die mechanisch oder elektrisch angetrieben sein kann oder als Strahlpumpe ausgebildet ist.

Der separate Kühler kann mit einer elektrisch angetriebenen Pumpe in Reihe liegen, die steuerbar ist. Damit wird die Kühlwirkung des separaten Kühlers außer Betrieb genommen, wenn der Rollkolbenverdichter vom Motor her beheizt werden soll. Der Steuerimpuls wird vorteilhafterweise abgeleitet von einem Meßfühler für die Kühltemperatur im Motor-Saugkanal.

Das Dreiwegeventil kann vorteilhaft mit einem Gaspedal für den Verbrennungsmotor gekoppelt sein, das auch auf einen Füllungsregler wirkt. Damit ergeben sich Vorteile bei einer gewollten starken Beschleunigung des Verbrennungsmotors aus dem Schwachlastbetrieb heraus. Die bis zu diesem Zeitpunkt sinnvolle Heizung des Verdichtergehäuses (Gasmotorbetrieb) soll nämlich abrupt beendet und auf volle Kühlung (Verdichterbetrieb) umgeschaltet werden. Praktisch bedeutet dies, daß die Verdichterleistung erhöht wird, wenn das Gaspedal des Verbrennungsmotors aus einer Teillaststellung in Vollastrichtung bewegt wird.

Im Koppelgestänge, das das Gaspedal des Verbrennungsmotors mit der Steuereinrichtung für die Temperatur des Rollkolbenverdichters verbindet, kann ein Korrekturglied angeordnet werden, das auf Schwankungen der Außentemperatur langsam wirkend anspricht. Denkbar ist eine manuelle Verstellung (Sommer-Winter-Schraube) oder eine Automatik, z.B. ein Bimetall-Steller.

Es ist auch denkbar, daß bei extremen Wetterbedingungen (Kaltstart im Winter) die erfindungsgemäßen Temperaturregelungen möglicherweise nicht schnell genug wirken, da sie die vorherige Erwärmung des Verbrennungsmotors voraussetzen. Für diesen Fall kann man so vorgehen, daß der Rollkolbenverdichter selbst zur Wärmeerzeugung eingesetzt wird. Dabei wird der Wirkungsgrad des Rollkolbenverdichters durch Drosselverluste kurzzeitig drastisch verschlechtert. Zum Beispiel kann dazu eine vor oder hinter dem Rollkolbenverdichter anzuordnende Drosselklappe teilweise geschlossen werden. Eine andere Möglichkeit liegt darin, daß ein innerer Bypaß geöffnet wird, der zwei Punkte unterschiedlichen Druckes miteinander verbindet. Niedriger Druck herrscht z.B. in einer Anzapfbohrung, die am Zylinderumfang entfernt von einem Trennelement des Rollkolbenverdichters angebracht wird. Höherer Druck herrscht dagegen in einer Bohrung im Zylinder in der Nähe des Auslasses oder im Auslaß selbst. Die zu einer solchen Regelung eingesetzten Steuerorgane können auch mit einer Verstellung des Einspritzbeginns für den Verbrennungsmotor gekoppelt sein.

Ist der Rollkolbenverdichter einem Dieselmotor zugeordnet, dann ist auch eine Motorbremseinrichtung sinnvoll, die die Wärmebilanz des Verdichters beeinflußt. Dabei wird die Koppelung zwischen dem Gaspedal und dem Füllmengenregler aufgehoben. Das Gaspedal geht auf Leerlauf, die Verdichtergehäusekühlung wird abgeschlatet, die Füllmengenregelung dagegen wird in Richtung auf Vollast verstellt, damit die Kompressionsarbeit im Dieselmotor vergrößert wird.

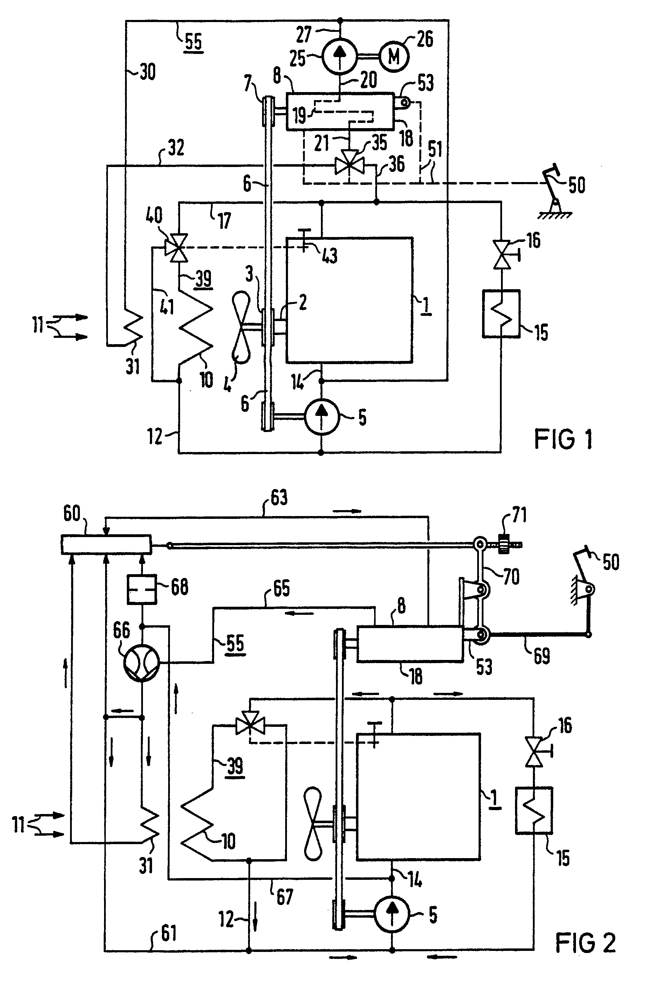

Zur näheren Erläuterung der Erfindung werden anhand der Zeichnung Ausführungsbeispiele beschrieben. Dabei zeigen die Figuren 1 bis 4 verschiedene Ausführungsformen der Kühlung und Erwärmung eines Rollkolbenverdichters, der von einem Verbrennungsmotor mechanisch angetrieben wird.

Die Figur 5 zeigt in einem Querschnitt die wesentlichen Merkmale eines Mischventils, das bei der Erfindung vorteilhaft eingesetzt wird.

Bei den Ausführungsbeispielen ist übereinstimmend der Verbrennungsmotor mit 1 bezeichnet. Es handelt sich z.B. um einen Dieselmotor mit 1,5 l Hubraum und einer aufgeladenen Leistung von 50 kW. Der Motor 1 besitzt eine Antriebswelle 2 mit einer Keilriemenscheibe 3 und einem Ventilator 4. Von der Keilriemenscheibe 3 aus wird über einen Keilriemen 6 eine Kühlwasserpumpe 5 betätigt. Ferner läuft der Keilriemen 6 über die Riemenscheibe 7 eines Rollkolbenverdichters 8. Der Rollkolbenverdichter ist vorzugsweise so aufgebaut, wie in der Patentanmeldung P 35 30 436.7 im einzelnen beschrieben ist.

Der Verbrennungsmotor 1 besitzt in bekannter Weise eine Wasserkühlung. Zu dieser gehört ein Kühler 10, der im Fahrtwind liegt, wie durch die Pfeile 11 angedeutet ist. Der Kühler wird ferner durch die Luftbewegung beaufschlagt, die der Ventilator 4 in Gang setzt. Die Auslaßleitung 12 des Kühlers 10 führt zu der Kühlwasserpumpe 15. Von dort wird das abgekühlte Kühlwasser über die Leitung 14 in den Motor 1 gedrückt. Außerdem ist am Eintritt der Pumpe 5 ein Wärmetauscher 15 für die Wagenheizung angeschlossen. Dieser Wärmetauscher wird mit einem vorgeschalteten Regelventil 16 wirksam gemacht. Das im Motor 1 erhitzte Kühlwasser geht in die Einlaßleitung 17 des Kühlers 10 und in die Zuleitung der Wagenheizung 15, 16.

Der Rollkolbenverdichter 8 ist ebenfalls wassergekühlt. Dies bedeutet, daß das seinen Zylinder bildende Gehäuse 18 geeignete Kanäle 19 zur Führung des Kühlwassers aufweist. Die Kanäle 19 sind zu einem Kühlwasserauslaß 20 zusammengeführt. Der zugehörige Kühlwassereinlaß ist mit 21 bezeichnet.

Der Kühlwasserauslaß 20 führt zu einer Nebenpumpe 25, die von einem ein- und ausschaltbaren Elektromotor 26 angetrieben wird. Der Auslaß 27 der Nebenpumpe 25 führt mit einer Leitung 30 zu einem separaten Kühler 31, der wie der Kühler 10 im Fahrtwind 11 angeordnet ist, und zwar in Windrichtung an erster, kälterer Stelle. Die Auslaßleitung 32 des separaten Kühlers 31 führt zu einem Dreiwegeventil 35. Mit diesem ist der Einlaß 21 des Rollkolbenverdichters 8 verbunden. Ferner ist das Dreiwegeventil 35 mit der Leitung 36 an die zum Verbrennungsmotor gehörende Kühlwasserleitung 17 angeschlossen.

Im Kühlwasserkreis 39 des Verbrennungsmotors 1 liegt ein Thermostatventil 40, das einen Nebenschluß 41 zum Kühler 10 steuert. Das Thermostatventil 40 wird von einem Thermostat 43 betätigt, der am Motor 1 sitzt und dessen Kühlwassertemperatur bei 90 °C hält.

Dem Verbrennungsmotor 1 ist ein Gaspedal 50 zugeordnet, mit dem die Brennstoffmenge und damit das Motordrehmoment geregelt wird. Mit dem Gaspedal 50 ist, wie die Wirkungslinie 51 andeutet, auch das Dreiwegeventil 35 gekoppelt. Auf diese Weise wird das Dreiwegeventil 35 umgeschaltet, wenn mit dem Gaspedal 50 von Teillast auf Vollast verstellt wird. Dabei wird gleichzeitig über ein Steuerorgan 53, insbesondere einen Drehschieber, der als Füllmengenregler dient, der Durchsatz und damit der Ladedruck des Rollkolbenverdichters 8 erhöht.

Bei dem in Figur 1 dargestellten Ausführungsbeispiel kann der Rollkolbenverdichter 8 über sein eigenes Kühlwassersystem 55 mit Hilfe des separaten Kühlers 31 unabhängig vom Verbrennungsmotor 1 gekühlt werden. Er kann aber auch mit dem Kühlwasserkreis 39 des Verbrennungsmotors 1 so verbunden werden, daß er sich seine Gehäusetemperatur der Temperatur des Verbrennungsmotors 1 nähert. Damit kann Wärme auf den Rollkolbenverdichter 8 übertragen werden, die in diesem entstehende Abkühlungen bei Teillastbetrieb ausgleicht.

Bei dem Ausführungsbeispiel nach Figur 2 ist der separate Kühler 31 des Rollkolbenverdichters 8 an ein Mischventil 60 angeschlossen, das später anhand der Figur 5 näher erläutert wird. An das Mischventil führt ferner eine Leitung 61, die an den Kühlwasserkreis 39 des Verbrennungsmotors 1, nämlich an den Auslaß 12 des Kühlers 10 angeschlossen ist. In die Leitung 61 mündet auch der Auslaß einer Strahlpumpe 66.

Mit dem Mischventil 60 wird die Temperatur des Kühlwassers geregelt, das dem Rollkolbenverdichter 8 von dem Mischventil 60 über die Leitung 63 zugeführt wird. Das aus dem Rollkolbenverdichter 8 austretende Kühlwasser wird über die Leitung 65 zu der Strahlpumpe 66 geführt. Diese wird als Treibwasser mit Wasser aus dem Kühlkreis 39 des Verbrennungsmotors 1 beaufschlagt. Zu diesem Zweck ist die Druckleitung 14 der Pumpe 5 über eine Leitung 67 mit der Strahlpumpe 66 verbunden. Über eine Drosselstelle 68 ist an die Leitung 67 auch das Mischventil 60 angeschlossen.

Das dem Verbrennungsmotor 1 zugeordnete Gaspedal 50 ist bei der Ausführungsform nach Figur 2 wiederum mit Steuereinrichtungen 53 als Füllmengenregler für den Rollkolbenverdichter 8 gekoppelt. Das Koppelgestänge 69 betätigt mit einer Schwinge 70 auch das Mischventil 60. Die Kopplung ist jedoch mit Hilfe einer als Korrekturglied wirkenden Stellschraube 71 einstellbar, die von Hand in Abhängigkeit von der Außentemperatur (Sommer, Winter) verstellt werden kann.

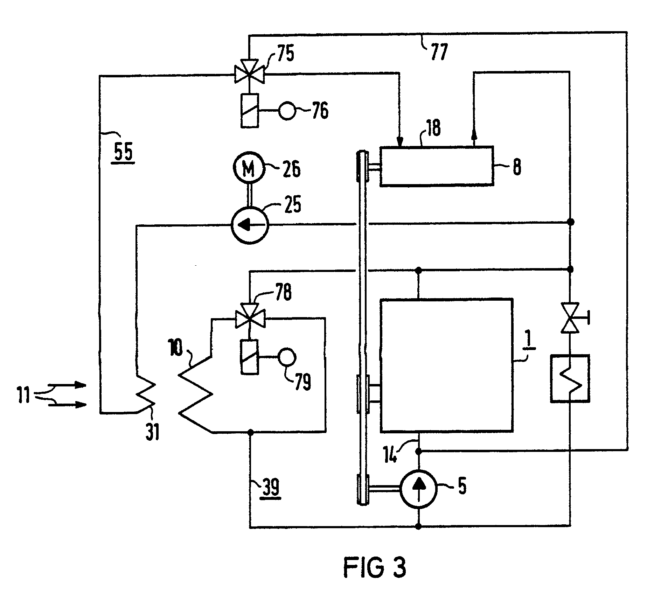

Bei dem Ausführungsbeispiel nach Figur 3 wird der separate Kühler 31 des Rollkolbenverdichters 8 über die Elektropumpe 25 mit dem steuerbaren Motor 26 über ein Dreiwegeventil 75 gekühlt, das von einem Temperaturfühler 76 temperaturabhängig betätigt wird. An das Dreiwegeventil 75 ist die Druckleitung 14 der Pumpe 5 des Verbrennungsmotors 1 über eine Leitung 77 angeschlossen. Der Temperaturfühler 76 kann dabei der Saugrohrtemperatur des Verbrennungsmotors 1 zugeordnet sein. Damit kann z.B. bei Temperaturen unterhalb von 10 °C eine Beheizung des Rollkolbenverdichters 8 erreicht werden. Bei höheren Saugrohrtemperaturen erfolgt eine Kühlung. Dabei kann ein Schaltverzögerungsglied dafür sorgen, daß nur längerfristige Temperaturabsenkungen im Saugrohr des Verbrennungsmotors 1 zu einem Beheizen des Rollkolbenverdichters 8 führen. Das Dreiwegeventil 78 des Nebenschlusses zum Kühler 10 wird von einem Temperaturfühler 79 gesteuert, der z.B. die Öltemperatur des Motors 1 erfaßt.

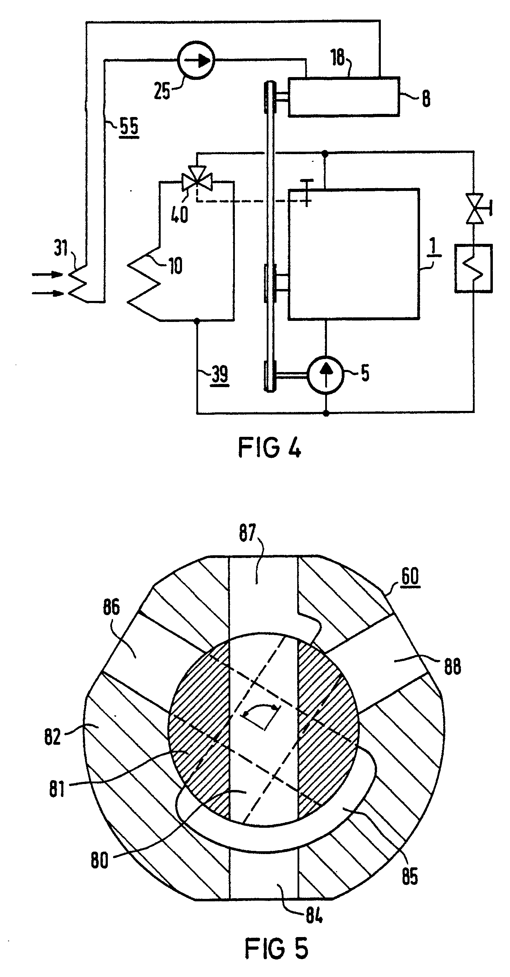

Bei dem Ausführungsbeispiel nach Figur 4 ist eine vereinfachte Temperaturregelung des Rollkolbenverdichters 8 vorgesehen. Der Wasserkühlkreis 55 des Rollkolbenverdichters 8 umfaßt außer dem Gehäuse 18 des Verdichters 8 nur den Kühler 31 und die Pumpe 25. Die Pumpe 25 ist steuerbar, insbesondere ausschaltbar. Damit wird eine Zweipunktregelung gefahren. Die Kühlung ist eingeschaltet, wenn die Temperatur im Saugrohr des Verbrennungsmotors 1 größer als 25 °C ist. Unterhalb von 15 °C wird die Pumpe 25 außer Betrieb genommen. Dazu kann z.B. das Ausrücken einer mechanischen Kupplung genügen, über die die Pumpe 25 vom Verbrennungsmotor 1 angetrieben wird. Wird die Pumpe 25 elektrisch angetrieben, so muß sie lediglich ausgeschaltet werden.

Zusätzlich kann das Gehäuse 18 des Rollkolbenverdichters 8 mit Ansaugluft beheizt werden, die am Auspuff des Verbrennungsmotors 1 erwärmt wird. Alternativ kann die erwärmte Luft direkt angesaugt werden. In beiden Fällen kann wie üblich eine Umschaltung von Hand für den Winterbetrieb vorgesehen sein. Es ist auch eine automatische, temperaturabhängige Umschaltung mit einer magnetisch gesteuerten Klappe in Abhängigkeit von der Temperatur des Rollkolbenverdichters denkbar. Allerdings entfaltet diese vereinfachte Art der Beheizung nur eine schwache Wirkung gerade dann, wenn sie am dringendsten benötigt wird, nämlich bei Teillast im Frostwetter.

Die Figur 5 zeigt in einem Querschnitt die Ausführung des Mischventils 60 nach Figur 2. Man erkennt, daß der mit einem geradlinigen Durchlaß 80 versehene Hahn 81 des Mischventils 60 in einem Gehäuse 82 sitzt, das folgende Anschlüsse aufweist:

84 ist der Auslaß, durch den das Kühlwasser mit einer geeigneten Temperatur über die Leitung 63 zum Rollkolbenverdichter 8 gelangt. Dieser Auslaß 84 ist mit einem Sammelraum 85 verbunden. Der Einlaß 86 führt zum Kühler 31. Von dort kommt also kaltes Wasser in das Mischventil 60.

An den Einlaß 87 ist die Auslaßleitung der Nebenpumpe 66 angeschlossen, die ihrerseits das Kühlwasser aus dem Gehäuse 18 des Rollkolbenverdichters 8 ansaugt. Von dort ist also mit Wasser mit Normaltemperatur zu rechnen.

An den Einlaß 88 ist die über die Drossel 68 kommende Verbindungsleitung zum Motor 1 angeschlossen. Von dort kommt heißes Kühlwasser.

Somit kann mit einem Schwenkwinkel des Hahns 81 von ca. 100°, die auch durch das Gaspedal 50 beeinflußt wird, in Abhängigkeit von der Außentemperatur eine für den Betrieb des Rollkolbenverdichters 8 und des Verbrennungsmotors 1 optimale Temperatur eingestellt werden. Wichtig ist, daß dabei ständig eine Verbindung mit dem Pumpenrücklauf aufrecht erhalten ist, die mit dem Sammelraum 35 erreicht wird. Damit wird eine Überhitzung zuverlässig vermieden. Das beschriebene Mischventil 60 (Vierwegeventil) ist eine verbesserte Ausgestaltung der Dreiwegeventile 35 oder 75.

## Ansprüche

1. Verbrennungsmotor (1) mit einem Kühlwasserkreis (39) und einem mechanisch mit dem Motor (1) verbundenen Verdichter (8) für die Verbrennungsluft, dessen Gehäuse (18) mit einer Kühleinrichtung (55) versehen ist, welche ein steuerbares Glied (45) zur Steuerung der Kühlleistung hat,
   dadurch gekennzeichnet, daß
   - der Verdichter (8) ein Rollkolbenverdichter ist, der derart ausgebildet ist, daß er in Abhängigkeit von den Betriebsbedingungen des Motors (1) zum Vorwärmen der Verbrennungsluft einsetzbar ist, daß das Gehäuse (18) an den Kühlwasserkreis (39) des Verbrennungsmotors (1) über ein Dreiwegeventil (35) angeschlossen ist, und daß die Kühleinrichtung (55) mit einem separaten Kühler (31) verbunden ist.

2. Verbrennungsmotor nach Anspruch 1,
   dadurch gekennzeichnet, daß der Rollkolbenverdichter (8) im Ansaugbereich ein Steuerorgan (53) umfaßt, das zur Füllmengenregelung den angesaugten Strom der Verbrennungsluft während eines Teils jeder Wellenumdrehung unterbricht.

3. Verbrennungsmotor nach Anspruch 1 oder 2,
   dadurch gekennzeichnet, daß dem separaten Kühler (31) eine separate Pumpe (25) zugeordnet ist.

4. Verbrennungsmotor nach Anspruch 3,
   dadurch gekennzeichnet, daß der separate Kühler (31) mit einer elektrisch angetriebenen Pumpe (25) in Reihe liegt, die steuerbar ist.

5. Verbrennungsmotor nach einem der Ansprüche 1 bis 4,
   dadurch gekennzeichnet, daß das steuerbare Glied (35) durch einen Temperaturfühler (76) betätigt wird, der in der Luftleitung zwischen dem Verdichter (8) und dem Verbrennungsmotor (1) angeordnet ist (Fig. 3).

6. Verbrennungsmotor nach einem der Ansprüche 1 bis 5,
   dadurch gekennzeichnet, daß das Dreiwegeventil (35) mit einem Gaspedal (50) für den Verbrennungsmotor (1) gekoppelt ist, das auch auf den Füllmengenregler (53) wirkt.

7. Verbrennungsmotor nach Anspruch 6,
   dadurch gekennzeichnet, daß ein mit dem Gaspedal (50) verbundenes Koppelgestänge (69) ein Korrekturglied aufweist, das manuell oder automatisch nach der Außentemperatur verstellbar ist (Sommer-Winter-Schraube).

8. Verbrennungsmotor nach einem der Ansprüche 1 bis 7,
   dadurch gekennzeichnet, daß vor oder nach dem Rollkolbenverdichter (8) ein Drosselorgan für die Verbrennungsluft vorgesehen ist.

9. Verbrennungsmotor nach Anspruch 8,
   dadurch gekennzeichnet, daß im Rollkolbenverdichter (8) eine steuerbare Drosselleitung (Bypaß) in einem Parallelweg zu Teilen des Zylinders oder zum Auslaß hin angeordnet ist.

10. Verbrennungsmotor nach einem der Ansprüche 8 oder 9,
    dadurch gekennzeichnet, daß eine Kaltstarteinrichtung vorhanden ist, die das Drosselorgan gemeinsam mit einer Verstellung der Brennstoffmenge oder des Einspritzbeginns zuschaltet.

11. Verbrennungsmotor nach einem der Ansprüche 1 bis 10,
    dadurch gekennzeichnet, daß eine Motorbremseinrichtung vorhanden ist, die in Leerlaufstellung des Gaspedals (50) die Steuerung des Rollkolbenverdichters (8) in Richtung auf die volle Fördermenge zu verstellen gestattet.

## Claims

1. Internal-combustion engine (1) with a cooling-water circuit (39) and a combustion-air compressor (8) connected mechanically to the motor (1), the housing (18) of the compressor being provided with a cooling device (55), which has a controllable element (45) for the control of the cooling capacity, characterized in that

- the compressor (8) is a rotary-piston compressor which is constructed in such a way that in dependence upon the operational conditions of the motor (1) it can be employed for pre-heating the combustion air, that the housing (18) is attached to the cooling-water circuit (39) of the internal-combustion engine (1) by means of a three-way valve (35), and that the cooling device (55) is connected to a separate cooler (31).

2. Internal-combustion engine according to claim 1, characterized in that the rotary-piston compressor (8) in the intake region comprises a control part (53), which for the filling-quantity regulation interrupts the intake current of the combustion air during a part of each shaft revolution.

3. Internal-combustion engine according to claim 1 or 2, characterized in that a separate pump (25) is associated with the separate cooler (31).

4. Internal-combustion engine according to claim 3, characterized in that the separate cooler (31) lies in series with an electrically driven pump (25) which is controllable.

5. Internal-combustion engine according to one of claims 1 to 4, characterized in that the controllable element (35) is actuated by a temperature sensor (76) which is arranged in the air line between the compressor (8) and the internal-combustion engine (1) (Figure 3).

6. Internal-combustion engine according to one of claims 1 to 5, characterized in that the three-way valve (35) is coupled to an accelerator pedal (50) for the internal-combustion engine (1) which also acts on the filling-quantity regulator (53).

7. Internal-combustion engine according to claim 6, characterized in that a coupling linkage (69) connected to the accelerator pedal (50) has a correction element which can be manually or automatically adjusted according to the outer temperature (summer-winter-screw).

8. Internal-combustion engine according to one of claims 1 to 7, characterized in that a throttle element for the combustion air is provided in front of or behind the rotary-piston compressor (8).

9. Internal-combustion engine according to claim 8, characterized in that in the rotary-piston compressor (8) there is arranged a controllable throttle line (by-pass) in a parallel path to parts of the cylinder or to the outlet.

10. Internal-combustion engine according to one of claims 8 or 9, characterized in that a cold-start device is present which switches the throttle element on in concert with an adjustment of the fuel quantity or of the beginning of the injection.

11. Internal-combustion engine according to one of claims 1 to 10, characterized in that a motor braking device is present which in the idling position of the accelerator pedal (50) allows the adjustment of the control of the rotary-piston compressor (8) in the direction of the full quantity conveyed.

## Revendications

1. Moteur à combustion interne (1) comprenant un circuit d'eau de refroidissement (39) et un compresseur (8) de l'air de combustion, qui est relié mécaniquement au moteur (1) dont le carter (18) est muni d'un système de refroidissement (55) et qui présente un élément (45) susceptible d'être commandé et destiné à commander la puissance de refroidissement caractérisé en ce que

- le compresseur (8) est un compresseur à piston rotatif constitué de façon à pouvoir être utilisé en fonction des conditions de fonctionnement du moteur (1) pour préchauffer l'air de combustion, en ce que le carter (18) est raccordé au circuit d'eau de refroidissement (39) du moteur à combustion interne (1) par une vanne à trois voies (35) et en ce que le système de refroidissement (55) communique avec un dispositif de refroidissement (31) distinct.

2. Moteur à combustion interne suivant la revendication 1, caractérisé en ce que le compresseur à piston rotatif (8) comporte dans la zone d'aspiration un organe de commande (53) qui, pour régler la quantité de remplissage, interrompt le courant de l'air de combustion qui est aspiré pendant une partie de chaque rotation de l'arbre.

3. Moteur à combustion interne suivant la revendication 1 ou 2,
caractérisé en ce qu'une pompe (25) distincte est associée au dispositif de refroidissement (31) distinct.

4. Moteur à combustion interne suivant la revendication 3,
caractérisé en ce que le dispositif de refroidissement (31) distinct est monté en série avec une pompe (25) qui peut être entraînée électriquement et qui peut être commandée.

5. Moteur à combustion interne suivant l'une des revendications 1 à 4,
caractérisé en ce que l'élément (35) qui peut être commandé est manoeuvré par une sonde de température (76), qui est montée dans le conduit pour l'air entre le compresseur (8) et le moteur à combustion interne (1) (figure 3).

6. Moteur à combustion interne suivant l'une des revendications 1 à 5,
caractérisé en ce que la vanne à trois voies (35) est couplée à une pédale d'accélération (50) pour le moteur à combustion interne (1), qui agit également sur le dispositif de réglage de la quantité de remplissage (53).

7. Moteur à combustion interne suivant la revendication 6,
caractérisé en ce qu'une tringlerie de couplage (69), qui est reliée à la pédale d'accélération (50), comporte un élément de correction qui peut être déplacé manuellement ou automatiquement suivant la température extérieure (vis été-hiver).

8. Moteur à combustion interne suivant l'une des revendications 1 à 7,
caractérisé en ce qu'en amont ou en aval du compresseur à piston rotatif (8) est prévu un organe d'étranglement pour l'air de combustion.

9. Moteur à combustion interne suivant la revendication 8,
caractérisé en ce que dans le compresseur à piston rotatif (8) est monté un conduit d'étranglement (dérivation) qui peut être commandé et qui est monté en parallèle avec des parties du cylindre ou avec la sortie.

10. Moteur à combustion interne suivant l'une des revendications 8 ou 9,
caractérisé en ce qu'il est prévu un dispositif de démarrage à froid qui branche l'organe d'étranglement en même temps qu'un réglage de la quantité de carburant ou du début de l'injection.

11. Moteur à combustion interne suivant l'une des revendications 1 à 10,
caractérisé en ce qu'il est prévu un dispositif de freinage du moteur, qui permet, en position de ralenti de la pédale d'accélération (50), de régler la commande du compresseur à piston rotatif (8) dans le sens de la pleine quantité d'alimentation.

FIG 1

FIG 2

FIG 3

FIG 4

FIG 5